# EUROPEAN PATENT APPLICATION

(11) **EP 1 659 352 A2**
(43) Date of publication of application: **24.05.2006**
(21) Application number: 05024837.6
(22) Date of filing: 14.11.2005
(51) Int. Cl.: F25B 41/06, G05D 16/06

(54) **Expansion device**

(30) Priority: 19.11.2004 JP 2004335225; 27.12.2004 JP 2004375158; 22.02.2005 JP 2005045214; 20.06.2005 JP 2005178718
(71) Applicant: TGK COMPANY, LTD., Tokyo 193-0942 (JP)
(72) Inventor: Hirota, Hisatoshi, Hachioji-shi Tokyo 193-0942 (JP)
(74) Representative: Grünecker, Kinkeldey, Stockmair & Schwanhäusser Anwaltssozietät

(57) **Abstract**

The expansion device comprises a differential pressure valve 2, the valve lift of which is controlled according to the differential pressure across the expansion device, and a temperature-sensing section 3 for further controlling the valve lift according to temperature. A piston 8 integral with a valve element 6 has a larger outer diameter than the valve element 6. The piston 8 defines a pressure-adjusting chamber 11 into which the inlet pressure is introduced via a pressure passage 12. When the inlet pressure becomes high, the differential pressure valve 2 operates in valve opening direction. The temperature-sensing section 3 contains a bellows 14 that can axially expand and contract, filled with a wax 16 having a large coefficient of thermal volumetric expansion such that the differential pressure valve 2 operates in valve closing direction when the inlet temperature becomes high.

## Description

The invention relates to an expansion device according to the preamble of claim 1, particularly for a refrigeration cycle in an automotive air-conditioner using carbon dioxide (CO₂).

Known refrigeration cycles for automotive air-conditioners employ either a receiver for separating refrigerant condensed by a condenser into gas and liquid and a thermostatic expansion valve for expanding the obtained liquid refrigerant or employ an orifice tube for throttling and expanding refrigerant condensed by a condenser and an accumulator for separating refrigerant evaporated by an evaporator into gas and liquid. The orifice tube is a simple, fair cost small-diameter tube, and allows a high degree of freedom for layout. However, different from the thermostatic expansion valve, the orifice tube causes the refrigerant to be throttled and expanded only but is unable to either control the flow rate or to efficiently operate the refrigeration cycle in every situation.

In view of this, an expansion device has been proposed in JP Patent Application H09-264622 for a refrigeration cycle using CO₂. The expansion device is configured to change a restriction passage cross-sectional area of an orifice for throttling refrigerant according to the pressure and temperature of refrigerant on a gas cooler outlet side to efficiently operate the refrigeration cycle. This proposed expansion device has a valve structure, in which a hermetically sealed space partitioned by a displacement member (diaphragm) on an upstream side of a valve hole, serves for detecting the pressure and temperature of refrigerant introduced from the gas cooler. The valve hole is opened and closed by displacements of the displacement member from an upstream side. The sealed space is filled with refrigerant at a density within a range ranging from a saturated liquid density at a refrigerant temperature of 0 °C to a saturated liquid density at a critical point of the refrigerant. Thus, when the pressure of the introduced refrigerant is lower than the pressure in the hermetically sealed space corresponding to the temperature of the refrigerant, and vice versa, the valve hole is opened and closed. When the differential pressure between the refrigerant pressure and the space pressure exceeds a predetermined pressure value, the valve hole is opened with a valve lift dependent on the differential pressure. Pressure and temperature on the gas cooler outlet side can be controlled along an optimum control line determined by the temperature of the refrigerant on the gas cooler outlet side and a pressure maximizing a coefficient of performance. This allows the CO₂-refrigeration cycle to operate efficiently.

When the refrigerant is CO₂, it is filled into the space at a liquid density within the above-described range so that when the expansion device is left standing in the atmosphere at normal temperature the pressure in the space becomes very high causing the differential pressure between the refrigerant pressure in the space and the atmospheric pressure to become large up to a value of e.g. 7 to 8 MPa. Therefore, when a part of the expansion device is not correctly mounted, the displacement member limiting the hermetically sealed space can be deformed or broken. To cope with this inconvenience, another expansion device was proposed in JP Patent Application H11-63740, Figure 2, has a hard displacement member, namely a bellows. While an advantageous characteristic of the bellows is structural durability against external pressure, the hermetically sealed space is defined by the bellows and a housing enclosing the bellows from outside. A shaft portion transmitting displacements of the bellows to a valve element is inserted into the bellows. Even if high-pressure refrigerant is filled in the hermetically sealed space under an atmospheric pressure environment, the shaft prevents a corrugated portion of the bellows from being deformed inward by the differential pressure between the pressure of the refrigerant and the atmospheric pressure.

Basically, if the expansion devices are left standing under normal temperature and normal pressure environments, there is a danger of rupture of the hermetically sealed space irrespective of a bellows or a diaphragm. This requires a high-level quality control which increases the costs of the expansion devices.

It is an object the present invention to provide a low-cost expansion device which does not need a hermetically sealed high-pressure space, and which includes a restriction passage capable of changing a passage cross-sectional area according to the pressure and temperature of introduced refrigerant.

This object is achieved by the features of claim 1.

In the expansion device the differential pressure valve has its valve lift controlled in response to the pressure of introduced refrigerant. The solid or liquid material contained in the temperature-sensing section is characterized by a large coefficient of volumetric expansion in order to further control the valve lift of the differential pressure valve in response to the temperature of the introduced refrigerant without provision of any hermetically sealed container filled with a high-pressure gas. This enhances the safety in handling the expansion device when it is manufactured, stored, transported, and mounted in the refrigeration cycle. The differential pressure valve senses the refrigerant pressure and the temperature-sensing section senses the refrigerant temperature both to thereby vary the cross-sectional area of the restriction passage for performing a control operation similar to those of conventional expansion devices which include a hermetically sealed space filled with a high-pressure gas sensitive to pressure and temperature. This allows the refrigeration cycle to be operated more efficiently.

Embodiments will be explained referring to the drawings.
- Figure 1: is a central section of a first embodiment of an expansion device.
- Figure 2: is a diagram showing the temperature characteristics of a temperaturesensing section.
- Figure 3: is a central section of the expansion device of Figure 1 in an operating condition with high pressure.
- Figure 4: shows an operating condition with low temperature of the refrigerant.
- Figure 5: is a diagram showing the relationship between the differential pressure across the expansion device in Figure 1, the temperature of the refrigerant, and a passage cross-sectional area.
- Figure 6: is a central section of a second embodiment of the expansion device.
- Figure 7: is a central section of a third embodiment.
- Figure 8: is a section of a fourth embodiment.
- Figure 9: is a section of a fifth embodiment.
- Figure 10: is a section of a sixth embodiment.
- Figure 11: is a section of a seventh embodiment.
- Figure 12: is a section of an eighth embodiment.
- Figure 13: is a section of a ninth embodiment.
- Figure 14: is a section of a tenth embodiment.
- Figure 15: is a section of an eleventh embodiment.
- Figure 16: is a system diagram of a refrigeration cycle.
- Figure 17: is a cross-section of essential elements of the expansion device which is e.g. mounted in an internal heat exchanger.
- Figure 18: is a cross-section of essential elements of the expansion device e.g. mounted in an internal heat exchanger.

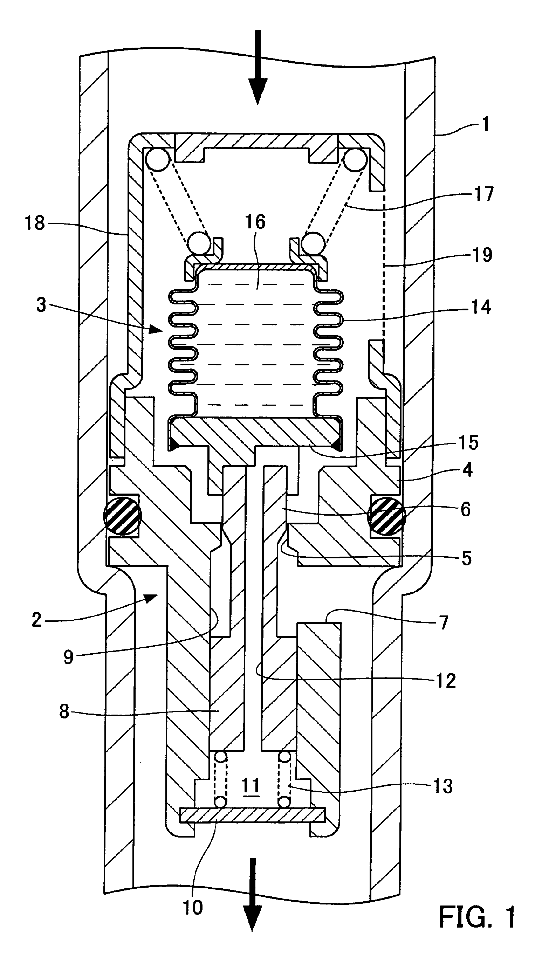

The expansion device in Figure 1 is disposed within a pipe 1 extending between a gas cooler and an evaporator of the refrigeration cycle. The expansion device includes a differential pressure valve 2 having a valve lift which is controlled according to the differential pressure across the expansion device, and a temperature-sensing section 3 that further controls the valve lift of the differential pressure valve 2 according to the refrigerant inlet temperature. An upper portion of the pipe 1 in Figure 1 corresponds to an upstream side for a flow from the gas cooler and a lower portion of the pipe 1 corresponds to a downstream side for a flow to the evaporator.

An axial valve hole 5 is formed in an upper central portion of a body 4. A spool-shaped valve element 6 is axially movable in the valve hole 5. When the portion of the valve element 6, at which the outer diameter starts to decrease, is located in the valve hole 5, a restriction passage is defined with a minimum restriction passage cross-sectional area through which refrigerant passes. The valve hole 5 communicates with an outlet port 7 in the body 4. The valve element 6 is integral with a coaxial piston 8 having a larger outer diameter than the valve element 6. The piston 8 is axially slidable in a cylinder 9 in the body 4. A lower end of the cylinder 9 is closed by a lid 10 to define a pressure-adjusting chamber 11. The valve element 6 and the piston 8 have an axial pressure passage 12 via which the pressure-adjusting chamber 11 communicates with the upstream side of the differential pressure valve 2 to introduce the inlet pressure into the pressure-adjusting chamber 11. A spring 13 urges the piston 8 toward the upstream side.

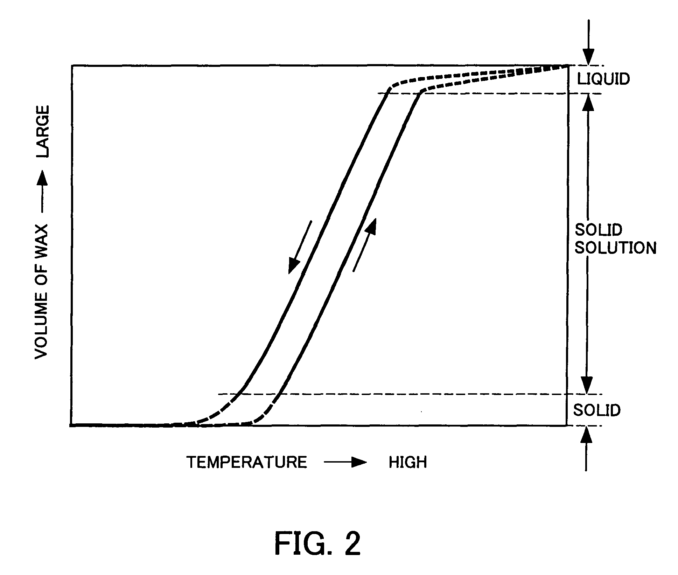

The temperature-sensing section 3 is disposed on the upper end of the valve element 6 and comprises a bellows 14, a sealing member 15 sealing an opening of the bellows 14, and a charge consisting of wax 16 filled in the container hermetically formed by the bellows 14 and the sealing member 15. As shown in Figure 2, the wax 16 has a property that its volume expands with rising temperature. When the wax 16 is in a solid state at low temperatures, or is in a liquid state at a high temperatures, it shows a very small coefficient of volumetric expansion relative to the temperature. To the contrary, in a state of a solid solution in which the wax changed from a solid to a liquid, at an intermediate temperature, it shows a large coefficient of volumetric expansion relative to the temperature. The temperature-sensing section 3 forms an actuator for controlling the differential pressure valve 2 by sensing temperature within a range in which the wax 16 is in the state of solid solution where the wax 16 has a large coefficient of volumetric expansion. The range of temperatures which the temperature-sensing section 3 senses is predetermined by the composition of the wax 16.

The temperature-sensing section 3 is fitted on the upper portion of the valve element 6 by a sealing member 15, and is urged by a spring 17 in closing direction of the differential pressure valve 2. The spring 17 abuts at a cup-shaped member 18 on an upper end of the body 4. An upper end of the cup-shaped member 18 covers the temperature-sensing section 3. The set load of the spring 17 is adjusted by the penetration depth of the body 4 press-fitted into an open end of the cup-shaped member 18. The cup-shaped member 18 has an opening and a filter 19. The sealing member 15 has a cutout where it is fitted on the valve element 6 such that a space accommodating the temperature-sensing section 3 and the pressure passage 12 communicate with each other.

High temperature, high-pressure refrigerant from the gas cooler flows into the expansion device from above in Figure 1 and further through the expansion device into the cup-shaped member 18, through the filter 19, and out from the outlet port 7 through the restriction passage between the valve hole 5 and the valve element 6. Through the restriction passage, the refrigerant is adiabatically expanded to be changed into low-pressure, low-temperature refrigerant in a gas-liquid, two-phase state. In the evaporator, the refrigerant in the gas-liquid two-phase state is evaporated by absorbing heat from air within a vehicle compartment, and when evaporated, it cools air in the vehicle compartment by depriving the air of latent heat of vaporization.

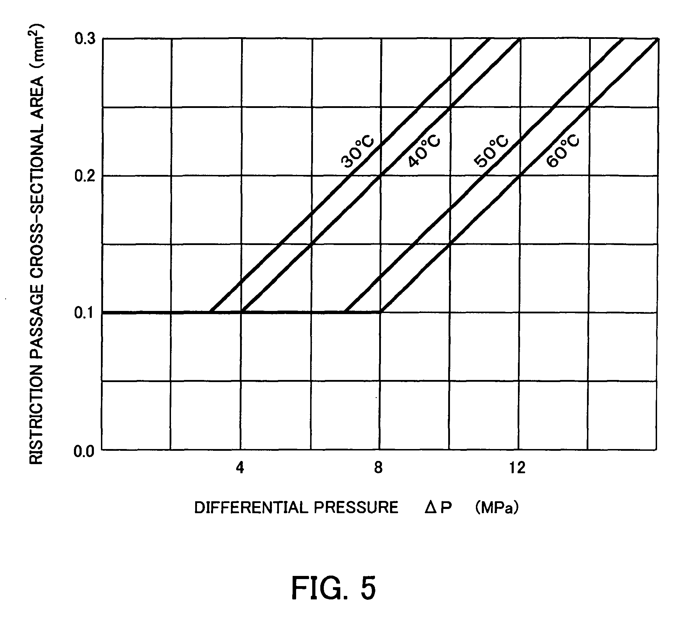

As shown in Figure 5, in a region where the differential pressure across the expansion device is small, the restriction passage has a constant cross-sectional area determined by a clearance between the valve hole 5 and the valve element 6. When the differential pressure exceeds a predetermined value, the differential pressure valve 2 starts to open, thereby proportionally increasing the passage cross-sectional area of the restriction passage, and at the same time the predetermined value at which the differential pressure valve 2 starts to open becomes higher as the temperature of refrigerant becomes higher. As shown in Figure 2, the wax 16 has a small coefficient of thermal volumetric expansion in the solid or liquid state but has a very large coefficient of thermal volumetric expansion in the state of solid solution so that in Figure 5 the distance between the temperature gradients is small in the solid or liquid state and larger in the solid solution state. Figure 1 shows a case when the temperature of refrigerant introduced into the expansion device is e.g. 60 °C and the differential pressure across the restriction valve is not higher than 8 MPa, as an example. Although the valve element 6 then receives the inlet pressure in valve closing direction, and the piston 8 receives the inlet pressure introduced into the pressure-adjusting chamber 11 via the pressure passage 12 in valve opening direction, a force in valve opening direction permanently acts on the valve element 6 due to the difference of the pressure-receiving areas of the valve element 6 and of the piston 8 since the outer diameter of the piston 8 is larger than the diameter of the valve element 6. Therefore, the valve element 6 is stopped at a location where the forces generated by the inlet pressure in valve opening direction, the load of the spring 17 acting in valve closing direction, and the load of the spring 13 interposed in the pressure-adjusting chamber 11 and acting in valve opening direction, are balanced.

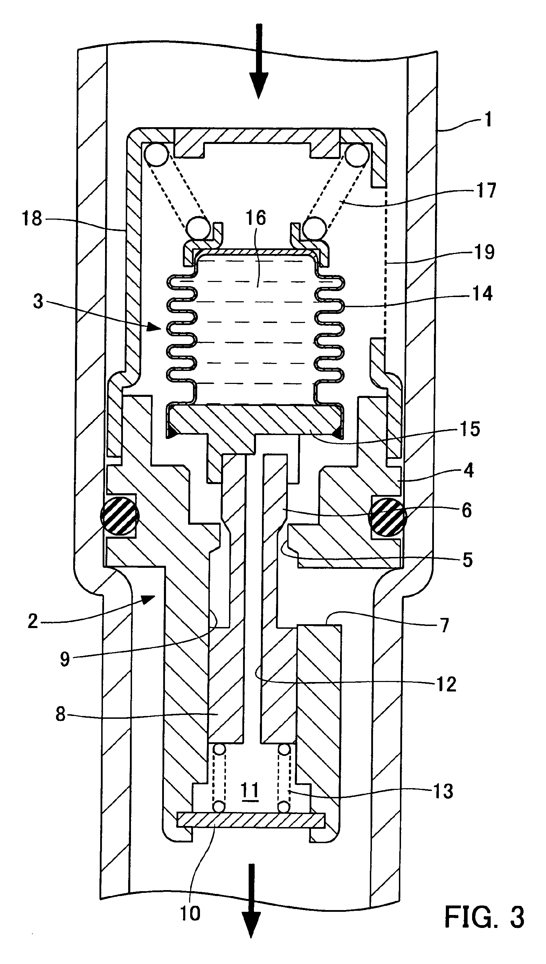

After that, from the state shown in Figure 1, when the inlet pressure becomes higher with no change in the inlet temperature, the force in valve opening direction acting on the valve element 6 due to the difference of the pressure-receiving areas of the valve element 6 and of the piston 8 is increased. The valve element 6 is moved in valve opening direction against the urging force of the spring 17 via the temperature-sensing section 3. When the inlet pressure increases until the differential pressure across the restriction passage reaches 8 MPa, the differential pressure valve 2 starts to open. When the differential pressure exceeds 8 MPa, the passage cross-sectional area of the restriction passage is increased in proportion to the differential pressure, whereby the expansion device is placed in a state shown in Figure 3. Since the inlet temperature of refrigerant still does not change, the wax volume does not change, and hence, the temperature-sensing section 3 or the bellows does not expand or contract in axial direction.

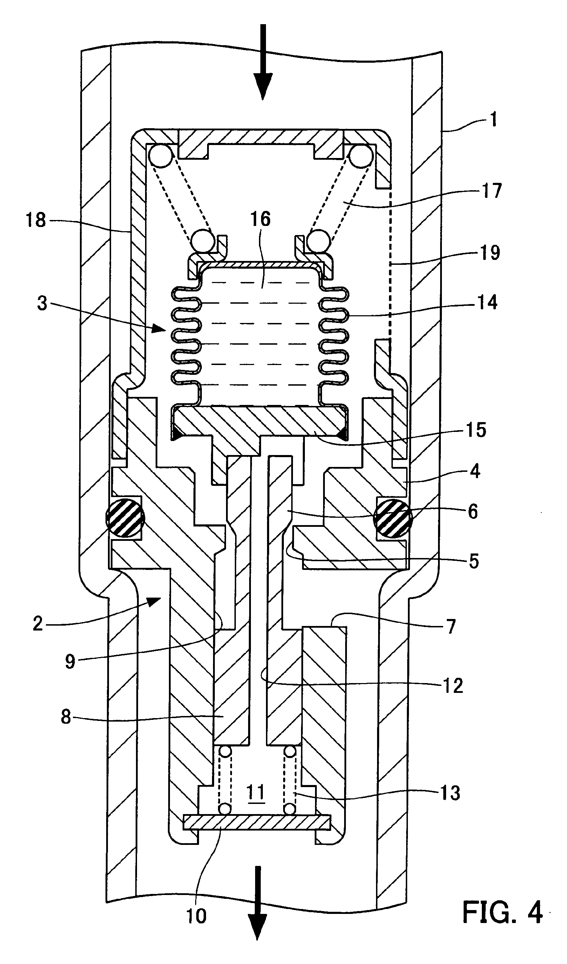

Further, from the state shown in Figure 1, when the inlet temperature becomes lower with no change in the inlet pressure, the volume of the wax contracts, whereby the temperature-sensing section 3 is axially shortened, i.e. the bellows contracts axially. At this time, since the inlet pressure does not change, neither the force acting on the valve element 6 in valve opening direction due to the difference of the pressure-receiving areas of the valve element 6 and 7 of the piston 8, nor the urging force of the spring 17 in valve closing direction change so that the valve element 6 moves in valve opening direction by a distance corresponding to the axial contraction of the temperature-sensing section 3. As a result, the passage cross-sectional area of the restriction passage becomes larger, whereby the expansion device is placed in a state shown in Figure 4.

Of course, when the inlet pressure decreases, or the inlet temperature increases, the cross-sectional area of the restriction passage is decreased as well.

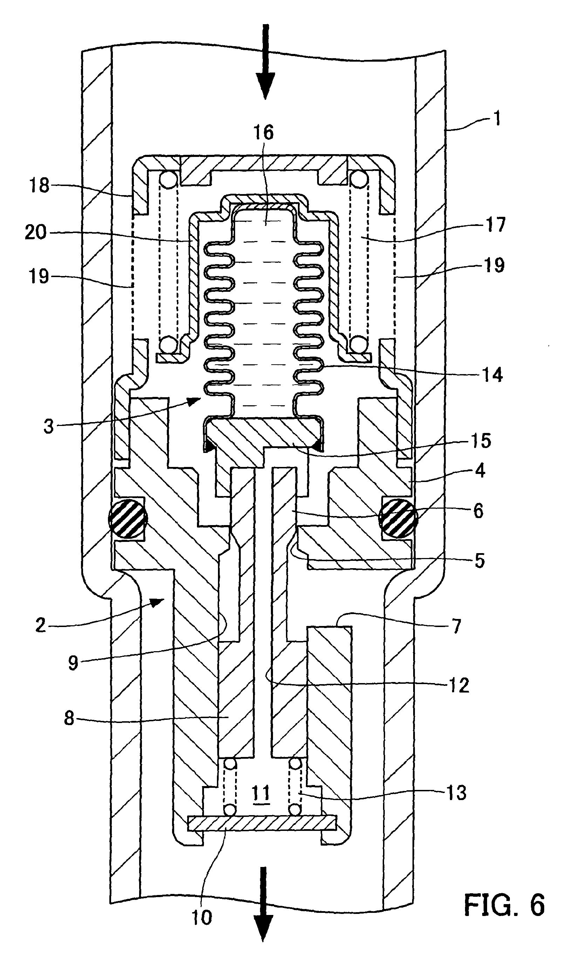

The expansion device in Figure 6 (second embodiment) has shorter axial length because it is configured such that the urging force of the spring 17 is transmitted to the temperature-sensing section 3 via a cup-shaped spring-receiving portion 20. The spring-receiving portion 20 has a radial flange portion at the open end. The flange portion receives one end of the spring 17, whereby the temperature-sensing section 3 and the spring 17 are arranged in parallel while they operate in series to reduce the axial length and to make the expansion device compact in size. The position where the spring 17 applies the urging force to the temperature-sensing section 3 lies closer to the valve element 6, and hence, the temperature-sensing section 3 becomes insusceptible to an external force acting in a direction perpendicular to the axis of the expansion device. This prevents that an upper end of the temperature-sensing section 3 in Figure 6 can be swung, whereby the temperature-sensing section 3 can be stably disposed.

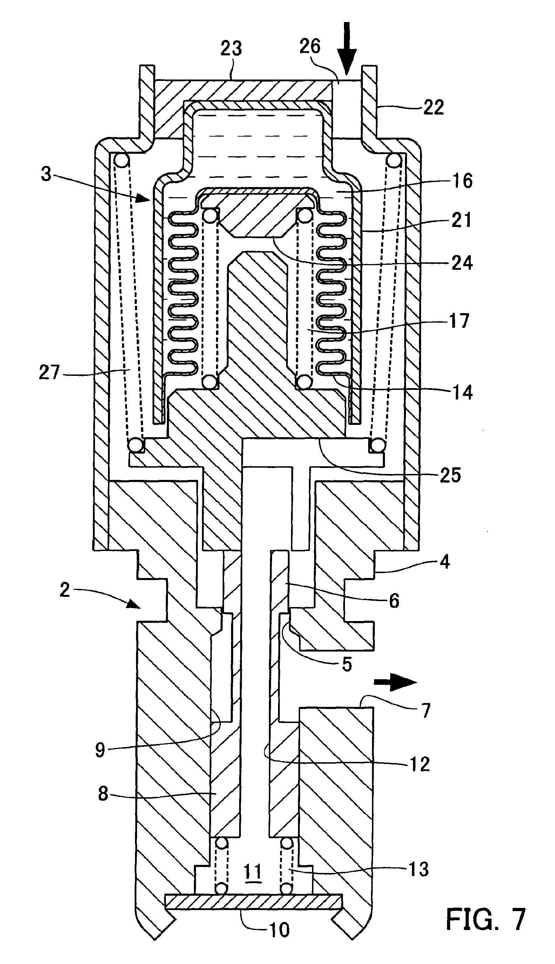

The expansion device in Figure 7 (third embodiment) has a modified temperature-sensing section 3 in order to enhance the degree of freedom of the adjustment of the spring 17. The bellows 14 is disposed within a cup-shaped member 21. The open ends of the bellows 14 and of the cup-shaped member 21 are sealed to each other. The wax 16 is filled between the bellows 14 and the cup-shaped member 21. A bottom portion of the cup-shaped member 21 is fitted in a holder 23 rigidly fixed to an upstream-side opening of a hollow cylindrical housing 22 outside the cup-shaped member 21, and the spring 17 is interposed between the temperature-sensing section 3 and the valve element 6, i.e. between a disk 24 on a bottom portion of the bellows 14 and a spring-receiving member 25 having a lower end face at which the valve element 6 abuts. The holder 23 has a refrigerant inlet port 26. The spring-receiving member 25 has a cutout where it abuts at the valve element 6 such that the space accommodating the temperature-sensing section 3 communicates with the pressure-adjusting chamber 11 via the pressure passage 12.

A bias spring 27 is interposed between a stepped portion of the hollow cylindrical housing 22 and the spring-receiving member 25. The bias spring 27 is disposed in parallel with the temperature-sensing section 3 and the spring 17 which both are arranged in series. The bias spring 27 does not undergo a change by the temperature and is disposed in parallel with the spring 17 which undergoes a change by the temperature. This allows a combination of the spring constants of both springs 27 and 17 to be set to thereby adjust changes in pressure caused by temperature. The set load of the spring 17 and of the bias spring 27 is adjusted by the penetration depth of the body 4 which is press-fitted into a lower open end of the hollow cylindrical housing 22.

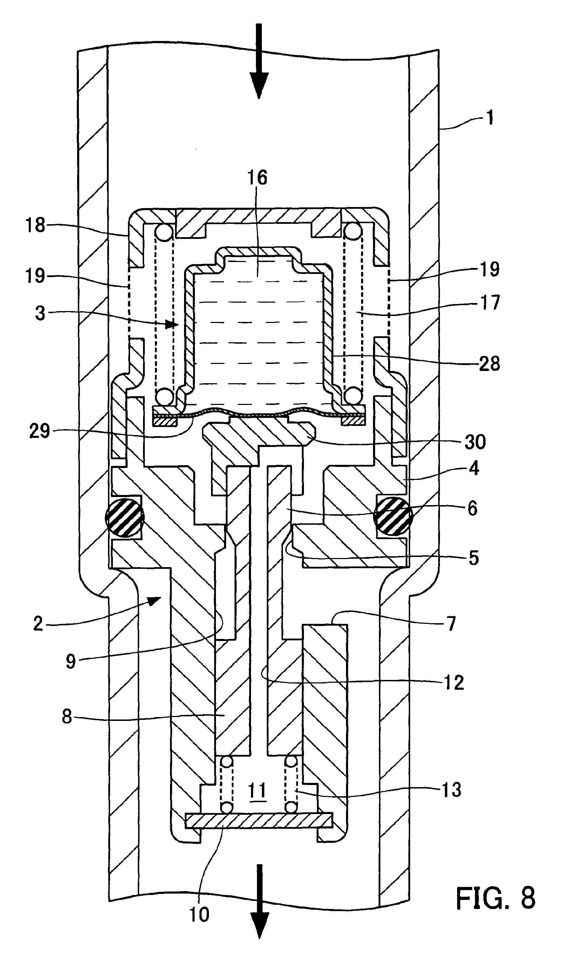

The expansion device in Figure 8 (fourth embodiment) also has a modified construction of the temperature-sensing section 3. The temperature-sensing section 3 in Figure 8 comprises a cup-shaped member 28, a diaphragm 29 rigidly fixed to an open flange portion of the cup-shaped member 28, and the wax 16 filled in a container hermetically sealed by the cup-shaped member 28 and the diaphragm 29. An upper surface of a displacement-transmitting member 30 fitted on the valve element 6 abuts at a central portion of the diaphragm 29. The spring 17 urges the temperature-sensing section 3 in valve closing direction and is disposed between the open flange portion of the cup-shaped member 28 and the cup-shaped member 18 disposed in a manner covering the temperature-sensing section 3.

The charge of the wax 16 expands or contracts according to changes of the inlet temperature, whereby the central portion of the diaphragm 29 is axially displaced. Those displacements are transmitted to the valve element 6 via the displacement-transmitting member 30 to control the valve lift. For example, if the temperature becomes high, the wax 16 of the cup-shaped member 28 expands to swell toward the only axially displaceable diaphragm 29 which is displaced in valve closing direction, and vice versa.

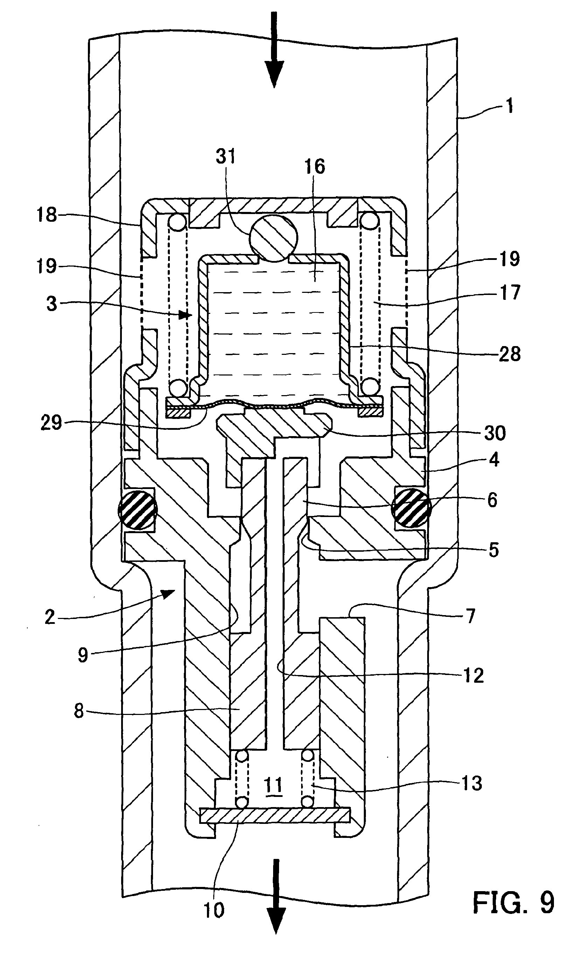

The expansion device in Figure 9 (fifth embodiment) also has a modified construction of the temperature-sensing section 3. The cup-shaped member 28 has a hole in a bottom and is sealed by a ball 31. The diaphragm 29 is rigidly fixed to the open flange portion of the cup-shaped member 28 e.g. by laser welding in ambient atmosphere. The cup-shaped member 28 is placed in a large assembly container with the bottom having the hole positioned upward, and is then evacuated. The wax 16, liquefied by heating, flows through the hole into the cup-shaped member 28. Then the ball 31 is placed on the hole and is fixed e.g. by resistance welding to hermetically seal the cup-shaped member 28. In operation, the wax 16 expands or contracts according to changes of the inlet temperature, whereby the central portion of the diaphragm 29 is axially displaced. Those displacements are transmitted to the valve element 6 via the displacement-transmitting member 30.

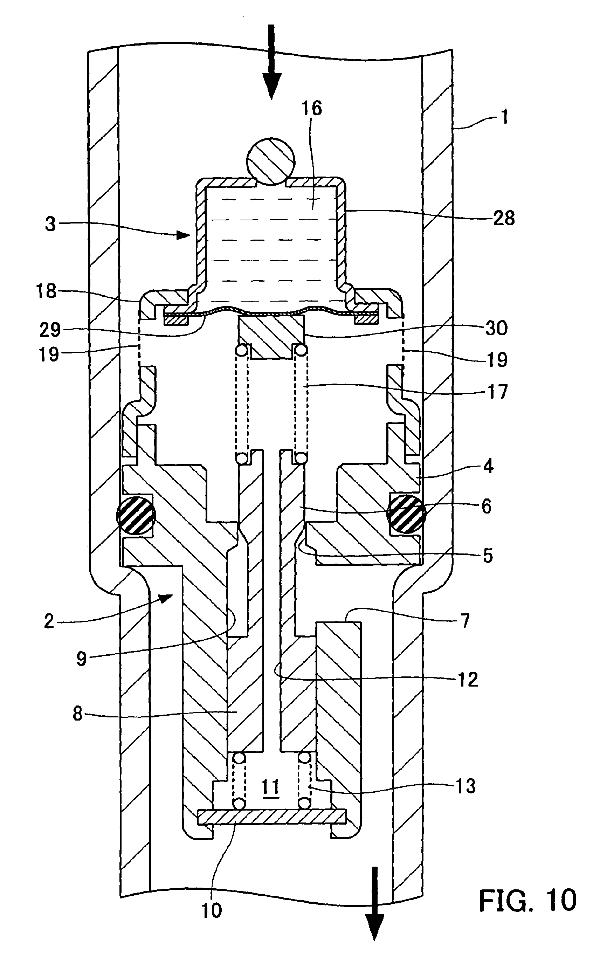

The expansion device in Figure 10 (sixth embodiment) has a special arrangement of the temperature-sensing section 3 and of the spring 17. The cup-shaped member 28 is fitted into a hole in the bottom of the cup-shaped member 18. The body 4 is press-fitted in an open lower end of the member 18. The spring 17 is disposed between the diaphragm 29 and the valve element 6. The valve element 6 is urged in valve closing direction with respect to the temperature-sensing section 3 in a fixed positional relationship with the body 4.

The expansion device of Figure 10 operates similarly to the differential pressure valves 2 of the first to fifth embodiments.

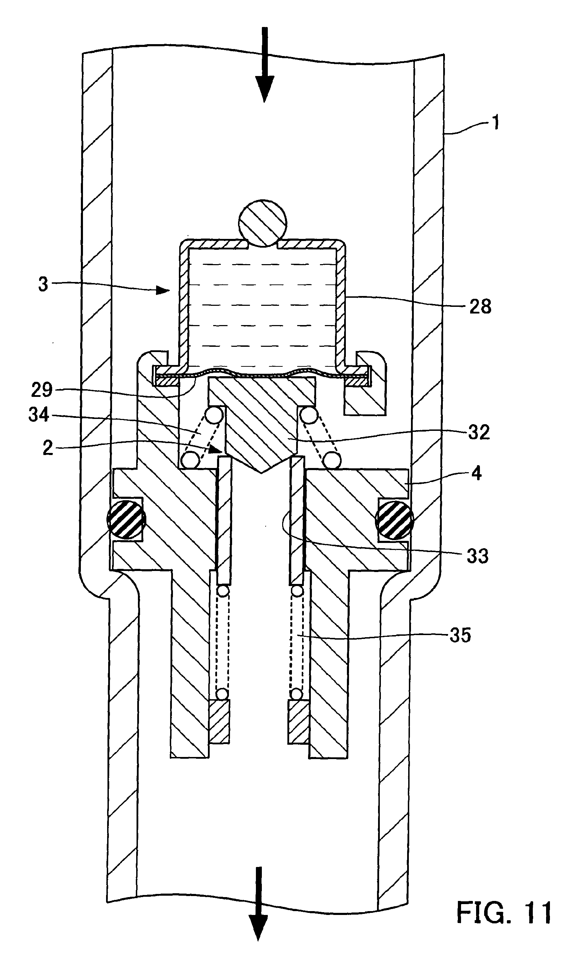

The expansion device in Figure 11 (seventh embodiment) has a modified construction of the differential pressure valve 2. The differential pressure valve 2 comprises a movable valve seat 32 the axial position of which changes according to the inlet temperature. The valve lift of which a hollow cylindrical valve element 33, is changed relative to the movable valve seat 32 by the differential pressure between the inlet pressure and the outlet pressure.

Flange portions fixedly securing the cup-shaped member 28 and the diaphragm 29 to each other are fixed to an open upper end of the body 4 by swaging. The movable valve seat 32 is pressed against a lower surface of the diaphragm 29 by a spring 34 having a large spring force. Thus, the movable valve seat 32 is axially displaced in a manner interlocked with the displacements of the diaphragm 29 according to the inlet temperature. The hollow cylindrical valve element 33 is held axially movable by the body 4 and is urged by a spring 35 toward the movable valve seat 32. High inlet pressure acts on an end face of the hollow cylindrical valve element 33 opposed to the movable valve seat 32 in a direction away from the movable valve seat 32, that is, in valve opening direction, and low outlet pressure acts on an end face on an opposite side to the movable valve seat 32 in valve closing direction. The differential pressure valve 2 is opened and closed by the differential pressure between the inlet pressure and the outlet pressure acting on the opposite end faces of the hollow cylindrical valve element 33 and by the urging force of the spring 35.

When the differential pressure is low, and the hollow cylindrical valve element 33 is seated on the movable valve seat 32, the differential pressure valve 2 is closed. The minimum flow rate is determined by a clearance between the hollow cylindrical valve element 33 and the body 4 holding the valve element 33. Refrigerant introduced from above, in Figure 11, is throttled by the clearance and undergoes adiabatic expansion when flowing out into an downstream-side space where the spring 35 is disposed. At this time, the temperature-sensing section 3 axially expands or contracts according to the inlet temperature, whereby the movable valve seat 32 is axially displaced, with the differential pressure valve 2 remaining closed.

When the differential pressure becomes larger than the urging force of the spring 35, the differential pressure valve 2 is opened. The valve opening degree changes according to the inlet temperature as detected by the temperature-sensing section 3. When the inlet temperature is low, the movable valve seat 32 is positioned at an upper position, in Figure 11, and vice versa. As the temperature rises, the movable valve seat 32 moves downward in a direction of contracting the spring 35 via the hollow cylindrical valve element 33, so that the spring force of the spring 35 grows. The valve opening position then is shifted toward a higher differential pressure side where it is more difficult to open the valve.

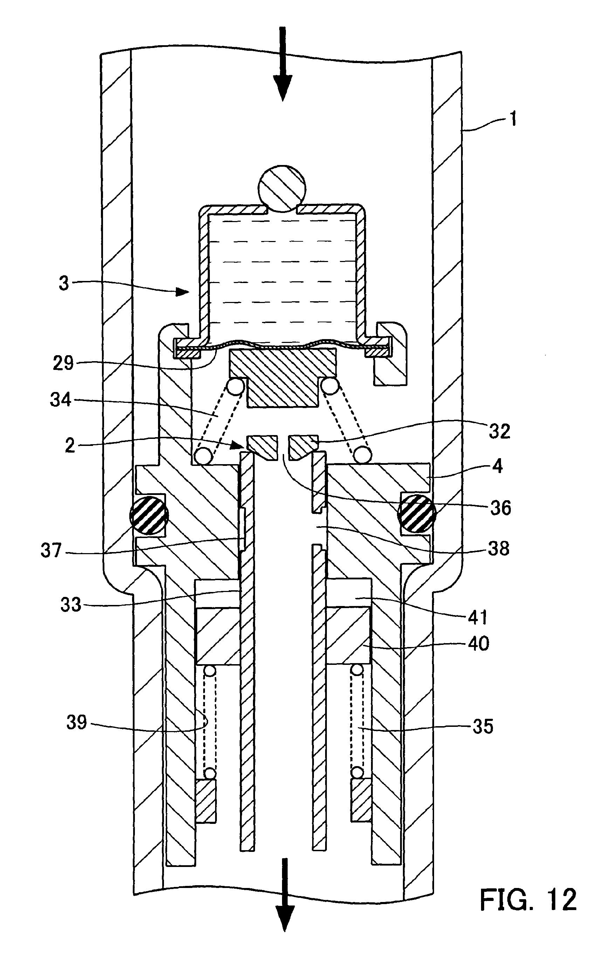

In the expansion device in Figure 12 (eighth embodiment) the hollow cylindrical valve element 33 is provided with a damper mechanism so as to prevent the differential pressure valve 2 from sensitively reacting to abrupt changes of the pressure and to prevent hunting of the refrigeration cycle.

The movable valve seat 32 is provided with an orifice 36 adjusting a minimum flow rate such that introduced refrigerant can be caused to flow directly into the inside of the hollow cylindrical valve element 33 as a space on the downstream side of the valve seat 32. The hollow cylindrical valve element 33 has an outer circumferential groove 37 within a portion of the bore of the body 4 that guides the valve element 33. The groove 37 communicates with the inside space of the valve element 33 via a communication hole 38. The orifice 36 of the movable valve seat 32, together with the clearance between the valve element 33 and the body 4, holding the same, determine the minimum flow rate in the closed state of the differential pressure valve 2.

An annular piston 40 is axially slidably guided within a cylinder 39 in the body 4 on the downstream side of the differential pressure valve 2. The piston 40 is fixed to the valve element 33. The valve element 33 is urged via the piston 40 by the spring 35 in valve closing direction. The piston 40 defines a damper chamber 41 within the cylinder 39. The damper chamber 41 communicates with the space on the downstream side of the valve element 33 via a clearance between the piston 40 and the body 4, and the clearance between the valve element 33 and the body 4 and the communication hole 38. Refrigerant flows into and out of the damper chamber 41 through the restricted passages of the clearances, which generates a resistance against too rapid axial motions of the piston 40, and forms the damper mechanism of the valve element 33. The groove 37 and the communication hole 38 in the valve element 33 lead high-pressure refrigerant to the low-pressure downstream side via an intermediate portion of the clearance between the valve element 33 and the body 4 so as to prevent high-pressure refrigerant from flowing into the damper chamber 41 via the clearance.

When the inlet pressure undergoes a rapid change, although the differential pressure valve 2 is about to perform a rapid opening or closing operation in response thereto, the damper mechanism prevents the hollow cylindrical valve element 33 from performing a rapid opening or closing operation such that the refrigeration cycle is prevented from reacting sensitively to rapid pressure changes which could cause hunting.

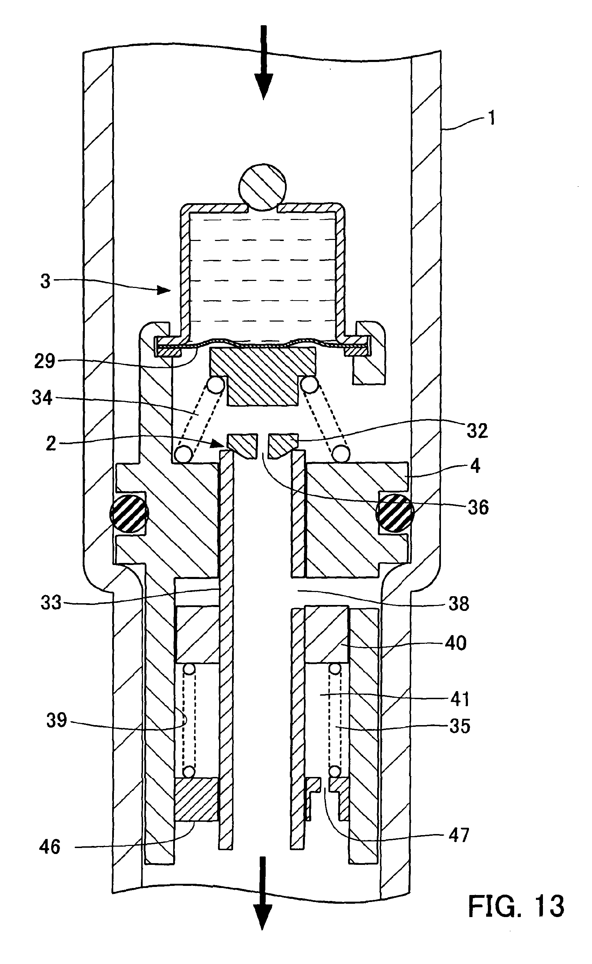

The expansion device in Figure 13 (ninth embodiment) has a modified construction of the damper mechanism of Figure 12. The damper chamber 41 is formed in Figure 13 by the annular piston 40 fixed to the valve element 33 and an annular closing portion 46 fixed to the cylinder 39. The closing portion 46 contains an orifice 47. Within the damper chamber 41, the spring 35 urges, via the piston 40, the valve element 33 in valve closing direction. The load of the spring 35 is adjusted by the penetration depth of the closing portion 46 press-fitted into the cylinder 39. A space above the piston 40 communicates with the space on the downstream side of the valve element 33 via the communication hole 38 in the valve element 33. This space permanently contains low pressure.

When the inlet pressure changes rapidly, since the damper mechanism suppresses rapid opening or closing operations of the hollow cylindrical valve element 33, the differential pressure valve 2 remains insensitive to rapid pressure changes.

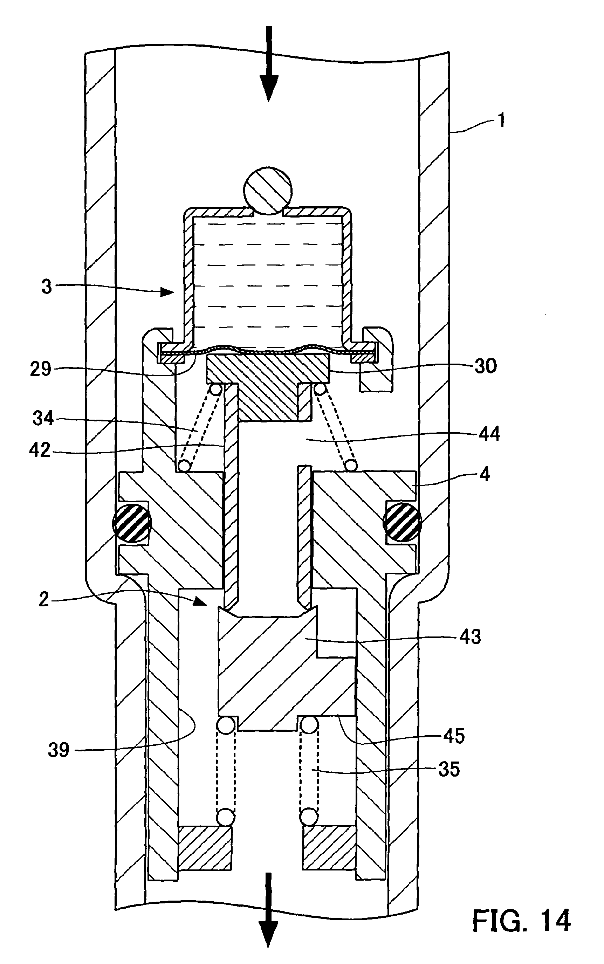

The expansion device in Figure 14 (tenth embodiment) has a further modified construction of the section of the differential pressure valve 2, where the position of the valve seat is changed according to a change of the inlet temperature compared to Figure 11. The movable valve seat 32 in Figure 11 receives low pressure on an area corresponding to the inner diameter of the hollow cylindrical valve element 33, and hence a large force acts on the movable valve seat 32 in a direction of closing the differential pressure valve 2, by the differential pressure between the received low pressure and the inlet pressure and this large force is received by the spring 34 having a large spring force. To the contrary, the valve seat 42 in Figure 14, which is movable by the temperature-sensing section 3, is configured to be hardly influenced by high inlet pressure, such that the spring 34 only needs a small spring force.

The differential pressure valve 2 comprises the hollow cylindrical movable valve seat 42 which is held axially movable by the body 4. A valve element 43 is disposed on the downstream side of the movable valve seat 42. The movable valve seat 42 has an upper end which is fitted on the displacement-transmitting member 30. The movable valve seat 42 has a lateral communication hole 44 in a portion close to the displacement-transmitting member 30 and is urged by the spring 34 toward the temperature-sensing section 3. The valve element 43 is centered and axially slidably guided within the cylinder 39 of the body 4 on the downstream side by a plurality of radially outward extending guides 45. The valve element 43 is urged by the spring 35 toward the movable valve seat 42.

The valve element 43 has an inwardly recessed end face opposed to the movable valve seat 42 in the form of a dish such that a sloped edge portion of the recessed end face abuts at an outer peripheral edge of the opposed end face of the movable valve seat 42. High-pressure refrigerant flows into the movable valve seat 42 through the communication hole 44. A force acting from the pressure on the movable valve seat 42 in downward direction in Figure 14, is cancelled by a force acting on the movable valve seat 42 in upward direction since an area having an annular shape corresponding to the radial thickness in cross section of the movable valve seat 42 forms a pressure-receiving area on which the high pressure acts in the downward direction while almost all of the lower end face in Figure 14, except for the outer periphery on which the valve element 43 is seated, forms a pressure-receiving area on which the high pressure also acts in upward direction. The movable valve seat 42 thus remains free from influences of the high inlet pressure. Since the movable valve seat 42 has a structure for canceling influences of the high pressure, it is possible to reduce the force of the spring 34.

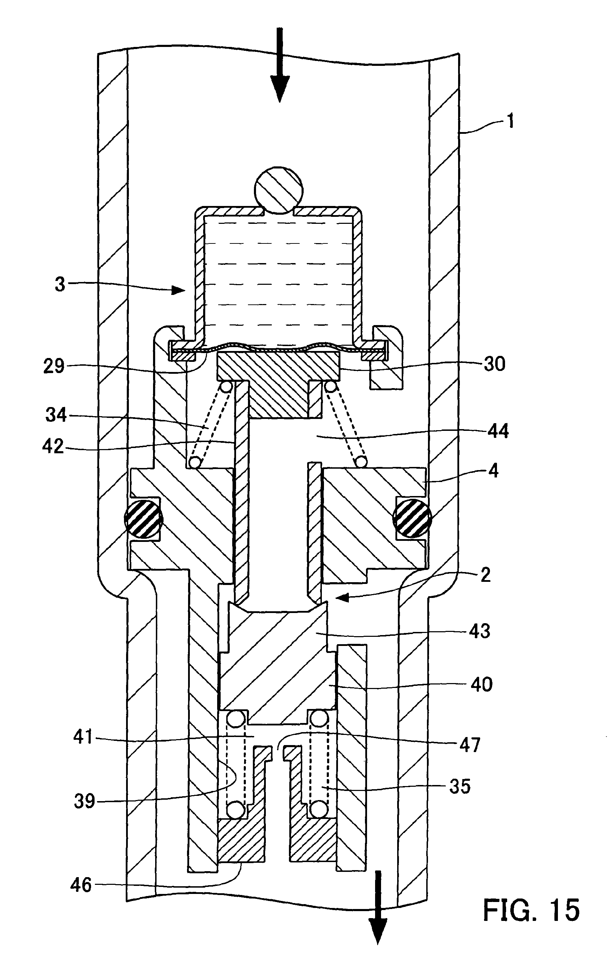

The expansion device in Figure 15 (eleventh embodiment) has a damper mechanism. The piston 40 is axially slidably disposed in the cylinder 39 of the body 4 on the downstream side. The closing portion 46 for closing the lower end of the cylinder 39 in Figure 15 and the piston 40 define the damper chamber 41. The piston 40 is integral with the valve element 43 and is urged upward by the spring 35 retained by the closing portion 46. The closing portion 46 has the orifice 47 for adjusting the potency or damping property of the damper mechanism in cooperation with the clearance between the piston 40 and the cylinder 39.

The movable valve seat 42 cancels the influences of the high pressure and the valve element 43 with the damper mechanism which allows both the force of the spring 34 to be reduced and prevents hunting of the refrigeration cycle.

In a refrigeration cycle using CO₂ as refrigerant and employing an internal heat exchanger to enhance the efficiency, the respective expansion device may be disposed within a pipe between the internal heat exchanger and the evaporator. This means that then the expansion device senses the refrigerant temperature at the outlet of the internal heat exchanger for controlling high pressure.

It is also possible that the expansion device as described above senses the refrigerant temperature at the inlet of the internal heat exchanger, and controls high pressure, whereby it is possible to further enhance the efficiency of the refrigeration cycle.

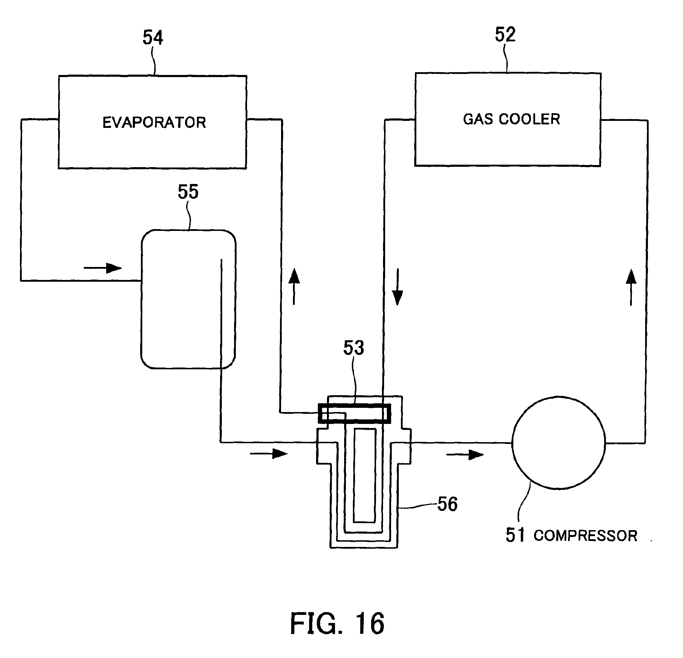

The refrigeration cycle in Figure 16 comprises a compressor 51 for compressing refrigerant, a gas cooler 52 for cooling the compressed refrigerant, an expansion device 53 for throttling and expanding the cooled refrigerant, an evaporator 54 for evaporating the expanded refrigerant, an accumulator 55 for storing surplus refrigerant in the refrigeration cycle and separating refrigerant in gaseous phase from the evaporated refrigerant and to supply the separated refrigerant to the compressor 51. An internal heat exchanger 56 is integrated for performing heat exchange between refrigerant flowing from the gas cooler 52 to the expansion device 53 and refrigerant flowing from the accumulator 55 to the compressor 51.

The expansion device 53 is mounted in the internal heat exchanger 56. The temperature-sensing section of the expansion device 53 senses the temperature of refrigerant introduced from the gas cooler 52 into the internal heat exchanger 56. The differential pressure valve is disposed such that high-pressure refrigerant having passed through the internal heat exchanger 56 is throttled and expanded to be delivered to the evaporator 54.

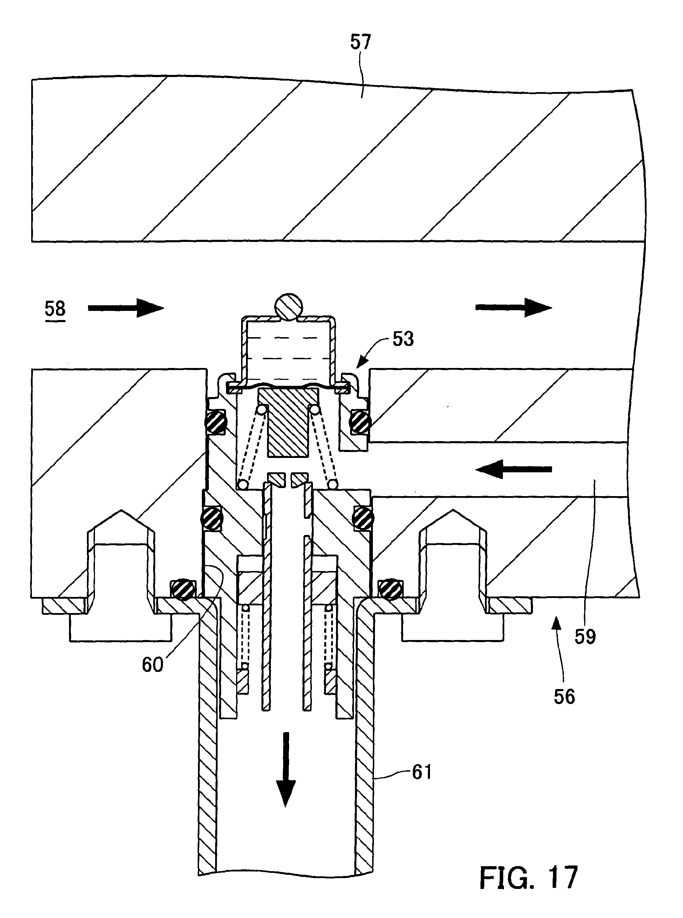

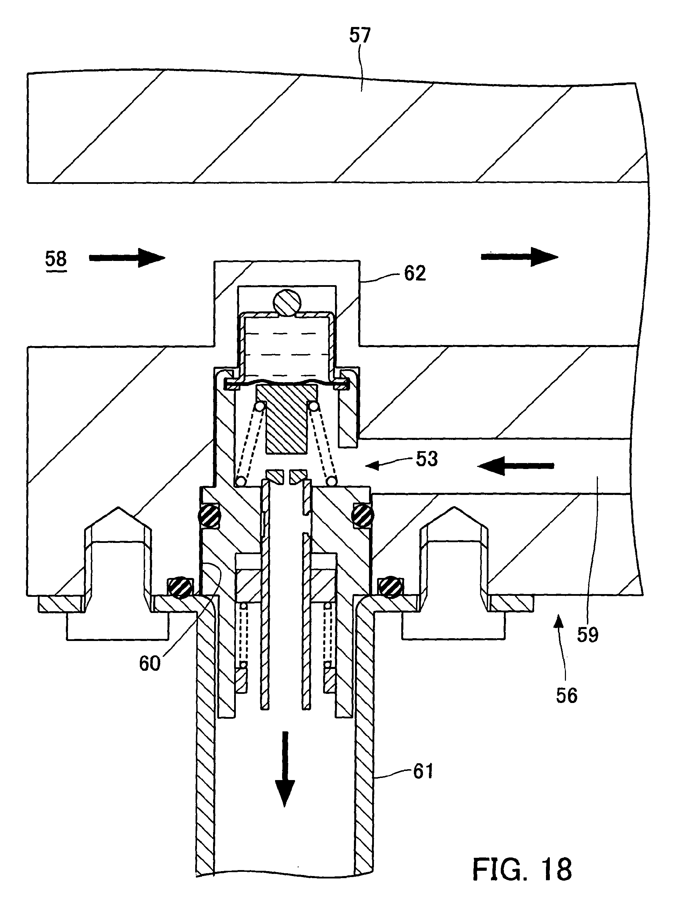

In Figure 17 and 18 the expansion device 53 in use is the eighth embodiment of Figure 12.

In the first example in Figure 17, the internal heat exchanger 56 has a body 57 formed with a refrigerant inlet passage 58 for high-pressure refrigerant from the gas cooler 52. The inlet passage 58 communicates with a return passage 59 through the internal heat exchanger 56 parallel to the inlet passage 58. The return passage 59 has a terminal end formed with a mounting hole 60 in which the expansion device 53 is mounted. The mounting hole 60 extends through the body 57 from the outside to the refrigerant inlet passage 58 across the return passage 59. The temperature-sensing section of the expansion device 53 is located in the refrigerant inlet passage 58. A pipe 61 leading to the evaporator 54 is mounted on the body 57 at an open end of the mounting hole 60 and covers the outlet of the differential pressure valve of the expansion device 53.

The upstream side of the differential pressure valve communicates with the return passage 59. The outer periphery of the body of the differential pressure valve is sealed by an O ring between the high-pressure upstream and low-pressure downstream sides. An O ring seals also between the refrigerant inlet passage 58 and the return passage 59.

The expansion device 53 directly senses the temperature of refrigerant introduced from the gas cooler 52 and 53 controls the movable valve seat of the differential pressure valve according to the inlet temperature of high-pressure refrigerant, while the differential pressure control valve performs differential pressure control of the high-pressure refrigerant. This allows the high pressure to be controlled such that the maximum efficiency is always attained with respect to the inlet temperature.

In the second example in Figure 18, the expansion device 53 is mounted such that it senses the refrigerant temperature via a partition wall 62 and by using the body 57 of the internal heat exchanger 56 because the body 57 is made of a material having excellent thermal conductivity. The partition wall 62 of a chamber accommodating the temperature-sensing section of the expansion device 53 is integral with the body 57 such that it protrudes into the refrigerant inlet passage 58. The chamber has a size suitable for bringing the inserted temperature-sensing section into intimate contact with the partition wall 62 to transfer the temperature of refrigerant flowing through the refrigerant inlet passage 58 into the partition wall 62 and further into the temperature-sensing section. In this case, an O ring sealing between the refrigerant inlet passage 58 and the return passage 59 can be omitted.

Although in the preferred embodiments the temperature-sensing section 3 controls the valve lift of the differential pressure valve 2 by using variations of the coefficient of thermal volumetric expansion of the charge of the wax 16, this is not limiting. The temperature-sensing section 3 may use instead a liquid having a large coefficient of thermal volumetric expansion such as alcohol. In this case, variations of the coefficient of thermal volumetric expansion of such a liquid would be linear in a wide temperature range so that the distances between temperature gradients shown in Figure 5 would not vary that strong but would be uniform.

## Claims

1. An expansion device (53) for throttling and expanding refrigerant circulating through a refrigeration cycle, **characterized by**
a differential pressure valve (2) operative in valve opening direction as the value of a differential pressure between an upstream introduction side pressure and a downstream delivery side pressure increases, and by
a temperature-sensing section (3) having a hermetically sealed container that can expand and contract in opening and closing directions of the differential pressure valve (2), the hermetically sealed container being filled with a solid or liquid material having a large coefficient of thermal volumetric expansion, the temperature-sensing section (3) causing the differential pressure valve (2) to operate in valve closing direction as the upstream side temperature of the refrigerant rises.

2. The expansion device according to claim 1, **characterized in that** the hermetically sealed container includes a bellows (14), that one end of the bellows (14) is closed, and that a sealing member (15) hermetically seals an opening in the other end of the bellows (14).

3. The expansion device according to claim 1, **characterized in that** the hermetically sealed container includes a cup-shaped member (18), and a diaphragm (29) for hermetically sealing an opening of the cup-shaped member (18).

4. The expansion device according to claim 1, **characterized in that** the material filled in the hermetically sealed container is a wax (16) or an alcohol.

5. The expansion device according to claim 1, **characterized in that** the differential pressure valve (2) includes a valve element (6) on an upstream side of a valve hole (5) such that the valve element (6) can be moved forward into or backward from the valve hole, a piston (8) having a larger outer diameter than the valve element (6), the piston (8) being integral with the valve element (6) on the downstream side of the valve hole (5), and a pressure-adjusting chamber (11) communicating with the upstream side of the valve hole (5) via a pressure passage (12) formed through the valve element (6) and the piston (8), for causing pressure of refrigerant introduced to the upstream side to also act on the piston (8) in valve opening direction.

6. The expansion device according to claim 5, **characterized in that** the valve element (6) is a spool for forming a restriction passage having a passage cross-sectional area corresponding to the clearance between the valve element (6) and the valve hole (5) when the differential pressure valve (2) is fully closed.

7. The expansion device according to claim 5, **characterized in that** the temperature-sensing section (3) has a fixed positional relationship with respect to a body (4) of the differential pressure valve (2), and that the temperature sensing section (3) transmits expansions and contractions in opening and closing directions to the valve element (6) of the differential pressure valve via a spring (17).

8. The expansion device according to claim 1, **characterized in that** the temperature-sensing section (3) has a fixed positional relationship with respect to a body (4) of the differential pressure valve (2), the differential pressure valve (2) including an axially movable valve seat (32) the axial position of which is changed by a temperature change sensed by the temperature-sensing section (3), and a hollow axially movable cylindrical valve element (33) held and guided by the body (4), the valve element being axially movable to and away from the movable valve seat (32), and that the valve element (33) is urged in a direction of being seated on the movable valve seat (32).

9. The expansion device according to claim 8, **characterized by** damper means for suppressing a rapid motion of the hollow cylindrical valve element (33) in both valve opening and closing directions.

10. The expansion device according to claim 1, **characterized in that** the temperature-sensing section (3) has a fixed positional relationship with respect to a body (4) of the differential pressure valve (2), the differential pressure valve (2) including a hollow cylindrical movable valve seat (42) axially movably held and guided by the body (4), that the axial position of the hollow cylindrical movable valve seat (42) is changed according to axial displacements of the temperature-sensing section (3) caused by temperature changes sensed by the temperature-sensing section (3), that the refrigerant is introduced on the upstream side, and that a valve element (4) is disposed with respect to the hollow cylindrical movable valve seat (42) on an axially downstream side in a manner movable to and away from the valve seat (42), and that the valve element (43) at the same time is in a state urged in a direction of being seated on the hollow cylindrical movable valve seat (42).

11. The expansion device according to claim 10, **characterized in that** the valve element (43) has an end face opposed to the hollow cylindrical movable valve seat (42), that the end face is recessed in the form of a shallow dish such that the valve element (43) is seated on an outer periphery of an opposed, preferably radial, end face of the hollow cylindrical movable valve seat (42).

12. The expansion device according to claim 10, **characterized by** a damper means (40, 46, 39) for suppressing rapid valve element motions in opening and closing directions.
